(19) Europäisches Patentamt
European Patent Office
Office européen des brevets

(11) **EP 2 828 119 B1**

(12) **FASCICULE DE BREVET EUROPEEN**

(45) Date de publication et mention de la délivrance du brevet:
**03.02.2016 Bulletin 2016/05**

(21) Numéro de dépôt: **13712885.6**

(22) Date de dépôt: **05.03.2013**

(51) Int Cl.:
**B60L 11/18** *(2006.01)*    **H02J 7/02** *(2006.01)*

(86) Numéro de dépôt international:
**PCT/FR2013/050471**

(87) Numéro de publication internationale:
**WO 2013/140059 (26.09.2013 Gazette 2013/39)**

(54) **PROCEDE DE CHARGE SANS CONTACT D'UNE BATTERIE D'UN VEHICULE AUTOMOBILE ELECTRIQUE**

VERFAHREN ZUM BERÜHRUNGSLOSEN LADEN EINER BATTERIE IN EINEM ELEKTRISCHEN FAHRZEUG

CONTACTLESS CHARGING METHOD OF AN ELECTRIC VEHICLE BATTERY

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(43) Date de publication de la demande:
**28.01.2015 Bulletin 2015/05**

(73) Titulaire: **Renault S.A.S.**
**92100 Boulogne-Billancourt (FR)**

(72) Inventeurs:
• **DOFFIN, Hugues**
  **F-78530 Buc (FR)**
• **CREGUT, Samuel**
  **F-78470 Saint Remy les Chevreuse (FR)**

(56) Documents cités:
**WO-A2-2008/145982    US-A- 4 654 573**
**US-A1- 2011 291 606**

• **COVIC G A ET AL: "Design Considerations for a Contactless Electric Vehicle Battery Charger", IEEE TRANSACTIONS ON INDUSTRIAL ELECTRONICS, IEEE SERVICE CENTER, PISCATAWAY, NJ, USA, vol. 52, no. 5, 1 octobre 2005 (2005-10-01), pages 1308-1314, XP011139887, ISSN: 0278-0046, DOI: 10.1109/TIE. 2005.855672**

**EP 2 828 119 B1**

**Description**

Est ici concerné la charge sans contact d'une batterie d'un véhicule automobile électrique ou hybride.

La charge est effectuée par induction magnétique : dans un emplacement appelé « zone de charge », on fait circuler un courant dans un circuit au sol possédant une bobine émettrice - ou primaire, ce qui fournit la puissance à une bobine réceptrice - ou secondaire, d'un véhicule automobile électrique ou hybride, ci-après simplement dénommé véhicule.

Le phénomène d'induction magnétique n'a lieu que si les bobines primaire et secondaire sont suffisamment proches l'une de l'autre, et la puissance transmise dépend en partie de la résonance du circuit au sol. Bien que le véhicule soit immobile lorsqu'il est en charge, la fréquence du courant circulant dans le circuit doit être adaptée en fonction de la position du secondaire par rapport au primaire, donc de la position du véhicule dans la zone de charge par rapport au primaire (immobile). Ceci afin d'atteindre la résonance du système.

Aussi plus précisément, selon un premier de ses objets, l'invention concerne un procédé de charge sans contact d'une batterie d'un véhicule automobile électrique par induction magnétique entre un circuit résonant émetteur comprenant une bobine émettrice d'un dispositif de charge et un circuit résonant récepteur du véhicule comprenant une bobine réceptrice, le véhicule étant positionné au-dessus de la bobine émettrice de sorte à pouvoir assurer un couplage magnétique entre la bobine émettrice et la bobine réceptrice, le procédé comprenant des étapes consistant à :

- commander l'alimentation électrique ainsi que les consignes d'un onduleur aux bornes duquel est reliée la bobine émettrice selon une fréquence variable,
- mesurer dans un circuit analogique au moins un signal analogique relatif à un courant ou à une tension aux bornes de la bobine émettrice,

Un tel procédé est connu de l'homme du métier, notamment par l'exemple qu'en donne le document de l'état de la technique antérieure EP2317624 qui vise notamment à comparer les phases entre la tension et le courant pour piloter la fréquence d'excitation, dans un circuit qui comporte un module « comparateur de phase », à partir de signaux logiques images du signe du courant et de la tension, pour générer un signal dont l'amplitude variable fait varier la fréquence d'excitation par un module VCO pour « Voltage Controlled Oscillator » en anglais, c'est-à-dire un oscillateur contrôlé en tension qui génère un signal dont la fréquence dépend de la tension d'entrée. De même façon, US2011291606 divulgue un procédé de charge sans contact d'une batterie de véhicule, où la fréquence d'alimentation électrique de la bobine émettrice est variée.

D'autres solutions consistent à faire varier la fréquence du circuit de charge en fonction de la puissance reçue au secondaire ; mais dans ce cas, la batterie du véhicule est susceptible de refuser un trop grand transfert de puissance.

Toutefois, de telles solutions sont complexes et coûteuses à mettre en oeuvre.

La présente invention a pour but de remédier à ces inconvénients en proposant une solution simple et essentiellement numérique.

Avec cet objectif en vue, le procédé selon l'invention, par ailleurs conforme au préambule cité ci-avant, est essentiellement caractérisé en ce qu'il comprend en outre des étapes consistant à :

- traiter numériquement au moyen d'une carte de contrôle au moins deux signaux numériques entrants, un premier signal numérique (Sgn_V1, PWM1-A) entrant relatif à la tension (U) et un second signal numérique (Sgn_I1, PWM1-B) relatif au courant (I), pour calculer le déphasage entre le courant (I) et la tension (U),
- transmettre des signaux numériques (PWM1-A, PWM1-B) de sortie de la carte de contrôle à l'onduleur de sorte à asservir l'onduleur à la valeur calculée du déphasage entre le courant (I) et la tension (U).

Grâce à l'invention, la détection de la différence de phase entre tension et courant est très simple au niveau matériel (*hardware*), elle minimise le nombre de composants électroniques hardware, et donc le coût de mise en oeuvre, une partie essentielle étant faite en numérique. Préférentiellement la valeur de déphasage correspond à la résonance du système.

Grâce à ces caractéristiques, le réglage des performances dans la partie numérique est facile et paramétrable. Plus précisément, l'asservissement de fréquence est réalisé au moyen d'une boucle logicielle, laquelle permet une souplesse complète de mise au point de l'asservissement. La fréquence est complètement variable en fonction du besoin et n'est pas soumise à des paramètres définis par des composants discrets, lesquels définissent des limites inférieure et supérieure de fréquence autorisées. Par conséquent, l'adaptation de la fréquence s'en trouve amélioré.

Grâce à l'invention, on peut rechercher la résonance à puissance transférée très réduite, ce qui est utile car une batterie de véhicule est susceptible de refuser un trop grand transfert de puissance.

En outre, la présente invention ne nécessite que des composants analogiques et une carte de contrôle.

Ainsi, la présente invention réduit de manière importante le nombre de composants analogiques, en les remplaçant par des fonctions remplies par le traitement logiciel réalisée par la carte de contrôle.

Dans un mode de réalisation, on prévoit une étape supplémentaire consistant à convertir ledit au moins un signal analogique en au moins un signal numérique (Sgn_I1, Sgn_V1).

Grâce à cette caractéristique, il est possible de diminuer l'encombrement de la présente invention en supprimant par exemple un moyen matériel pour mesurer la différence de phase entre la tension et l'intensité. Cela diminue le nombre de pièces matérielles.

Dans un mode de réalisation, on prévoit dans l'étape durant laquelle lesdits au moins deux signaux numériques entrants sont traités numériquement au moyen d'une carte de contrôle, que lesdits au moins deux signaux numériques entrants soient définis par un signal numérique (Sgn_V1) relatif à la tension et un signal numérique (Sgn_I1) relatif au courant, ces deux signaux (Sgn_I1, Sgn_V1) étant issus de l'étape de conversion ci-dessus mentionnée.

Cela permet de minimiser le déphasage entre la phase du courant et la phase de la tension. Grâce à cette caractéristique on a une robustesse du système par l'utilisation d'une boucle fermée sur la phase.

Grâce à l'invention, l'asservissement en fréquence est mise en oeuvre par une boucle logicielle, ce qui permet une souplesse complète de mise au point de l'asservissement (fréquence complètement variable en fonction du besoin).

Avantageusement, l'asservissement est mis en oeuvre par un régulateur proportionnel intégral dont la valeur du gain proportionnel et/ou la valeur du gain intégral sont choisis de sorte à optimiser la vitesse de convergence de la fréquence variable vers la valeur prédéterminée.

Dans un mode de réalisation, on prévoit dans l'étape durant laquelle lesdits au moins deux signaux numériques entrants sont traités numériquement au moyen d'une carte de contrôle, que lesdits au moins deux signaux numériques entrants soient définis au choix par :

- un signal numérique (Sgn_I1) relatif au courant et issu de l'étape de conversion tel que ci-dessus mentionné et un signal numérique (PWM1-A) de sortie relatif à la tension, ou,
- un signal numérique (Sgn_V1) relatif à la tension et issu de l'étape de conversion tel que ci-dessus mentionné et un signal numérique (PWM1-B) de sortie relatif au courant.

Il est encore plus avantageux de coupler l'un quelconque des signaux numériques de sortie de la carte de contrôle au signal numérique issu de l'étape de conversion lui correspondant - c'est-à-dire le couple permettant de calculer la différence de phase entre la tension et l'intensité.

Ainsi, on évite de reconstruire l'un des signaux numériques issu de l'étape de conversion tel que ci-dessus mentionné. De cette manière, le signal numérique de sortie de la carte de contrôle utilisé pour calculer la différence de phase est avantageusement moins bruité qu'un signal reconstruit au moyen du dit convertisseur. Un autre avantage est que l'on réduit encore le nombre de composants électroniques puisqu'un comparateur utilisé pour élaborer le signal numérique d'une des grandeurs physiques relatives au courant ou à l'intensité peut être supprimé.

Dans un autre mode de réalisation, le procédé comporte les étapes suivantes :

- Comparer :

  - le nombre d'incrémentations d'un premier compteur associé au dit signal numérique relatif à une première grandeur physique du type tension (Sgn_V1, PWM1-A) ou courant (Sgn_I1, PWM1-B) durant une période (P), et,
  - le nombre d'incrémentations d'un second compteur associé au dit signal numérique relatif à une seconde grandeur physique différente de ladite première grandeur physique du type courant (Sgn_I1, PWM1-B) ou tension (Sgn_V1, PWM1-A) lorsque ledit signal numérique relatif à la première grandeur physique commence une nouvelle période (P),

  Lesdits premier et second compteurs s'incrémentant régulièrement temporellement ;
- calculer la différence d'incrémentation entre les premier et second compteurs ;
- déterminer le déphasage entre les première et seconde grandeurs physiques en fonction de la différence d'incrémentation entre les premier et second compteurs.

Dans un mode de réalisation, on prévoit de mettre en oeuvre l'asservissement par un régulateur proportionnel intégral dont la valeur du gain proportionnel et la valeur du gain intégral sont choisis de sorte à optimiser la vitesse de convergence de la fréquence de l'onduleur vers la valeur prédéterminée.

Dans un mode de réalisation, on prévoit au moins une étape de filtrage de la valeur absolue du déphasage.

Selon un autre de ses objets, l'invention concerne un programme d'ordinateur, comportant des instructions pour l'exécution du procédé de charge sans contact d'une batterie d'un véhicule automobile tel que ci-dessus mentionné, lorsque ledit programme est mis en oeuvre par la carte mère.

Selon un autre de ses objets, l'invention concerne un système de charge sans contact par induction magnétique,

d'une batterie (Batt) d'un véhicule automobile électrique dont un circuit résonant récepteur comprend une bobine réceptrice,

Le système comprenant :

- un circuit résonant émetteur comprenant une bobine émettrice,
- un onduleur aux bornes duquel est reliée la bobine émettrice,
- une carte mère analogique et numérique sur laquelle est disposée une carte de contrôle, au moins un signal analogique relatif à une grandeur physique du type courant (I) ou tension (U) aux bornes de la bobine émettrice étant mesuré pour être traité numériquement au moyen de ladite carte de contrôle, au moins deux signaux numériques comportant un premier signal numérique (Sgn_V1, PWM1-A) relatif à la tension et un second signal numérique (Sgn_I1, PWM1-B) relatif au courant étant injectés en entrée de la carte de contrôle numérique laquelle émet en sortie au moins un signal numérique (PWM1-A,PWM1-B) formant consigne de commutation vers l'onduleur, ladite carte de contrôle traitant numériquement lesdits au moins deux signaux numériques (Sgn_V1, Sgn_I1, PWM1-A, PWM1-B) injectés en entrée de la carte de contrôle pour calculer le déphasage entre le courant et la tension, et,

la carte de contrôle (42) étant configurée pour asservir par un traitement numérique la fréquence des consignes de commutation (PWM1-A, PWM1-B) envoyées à l'onduleur (3) à la valeur du déphasage, de sorte à pouvoir assurer un couplage magnétique entre la bobine émettrice (11) et la bobine réceptrice (21) lorsque le véhicule (30) est positionné au-dessus de la bobine émettrice (11).

Dans un mode de réalisation du système susmentionné, lesdits premier et deuxième signaux (Sgn_V1, Sgn_I1) injectés en entrée de la carte de contrôle sont issus du dit convertisseur.

Dans un mode de réalisation du système susmentionné, lesdits premier (Sgn_V1, Sgn_I1) et deuxième signaux (PWM1-A, PWM1-B) injectés en entrée de la carte de contrôle sont respectivement issus du dit convertisseur et de ladite carte de contrôle.

D'autres caractéristiques et avantages de la présente invention apparaîtront plus clairement à la lecture de la description suivante donnée à titre d'exemple illustratif et non limitatif et faite en référence aux figures annexées dans lesquelles :

- la figure 1 illustre un schéma de principe global d'une charge sans contact d'un véhicule,
- la figure 2 illustre certains détails électroniques du schéma de la figure 1,
- la figure 3 illustre un mode de réalisation d'un circuit de mesure du déphasage en valeur absolue entre la tension et le courant,
- la figure 4 illustre un mode de fonctionnement de l'asservissement,
- la figure 5a et la figure 5b illustrent de manière synchrone la manière dont peut être calculé le déphasage,
- la figure 6 illustre un mode de réalisation du procédé selon l'invention,
- la figure 7a et la figure 7b illustrent de manière synchrone respectivement l'évolution de la fréquence de résonance et l'évolution du signal de déphasage (signé et non en valeur absolue) en fonction du temps en cas de mouvement relatif entre le primaire et le secondaire,
- la figure 8 illustre un schéma de principe global d'une charge sans contact d'un véhicule représentant une alternative par rapport à la solution présentée sur la figure 1.

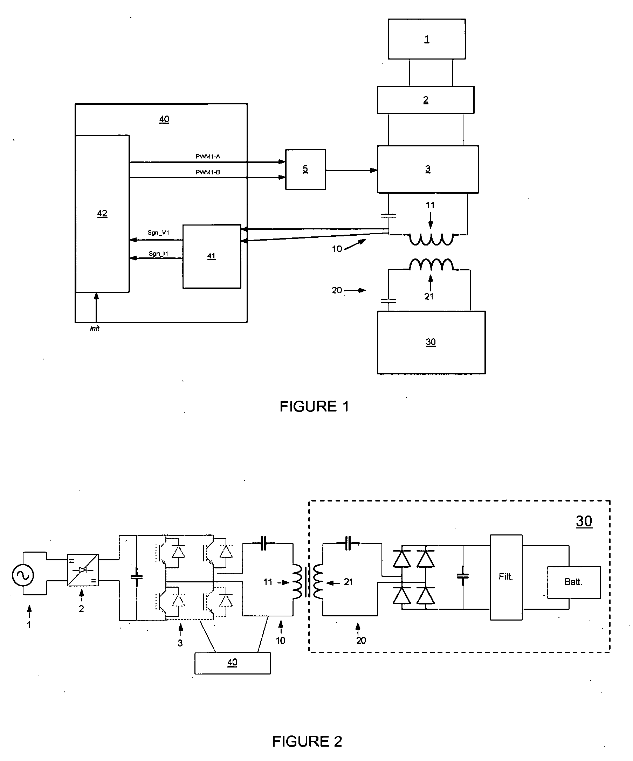

La figure 1 illustre le schéma général d'une charge sans contact d'un véhicule, et la figure 2 illustre certains détails électroniques de ce schéma général.

Une source électrique 1, typiquement un réseau électrique, émet un courant sinusoïdal vers un redresseur 2. Le redresseur 2 permet d'alimenter un onduleur 3 dont la fréquence est réglable. L'onduleur 3 alimente un circuit de charge 10, résonant, dit circuit LC, comprenant une bobine de charge 11 également appelée bobine émettrice ou encore primaire.

Le primaire 11 est susceptible de charger la batterie d'un véhicule 30 équipé d'un circuit récepteur 20, résonant, comprenant une bobine réceptrice 21 également appelée bobine secondaire ou simplement « secondaire ».

Le circuit de charge 10 et le circuit récepteur 20 sont configurés pour résonner à la même fréquence de résonance.

Or la fréquence de résonance dépend de la position relative du primaire et du secondaire.

Pour piloter la valeur de la fréquence de résonance, il est proposé de n'agir qu'au niveau de la charge, c'est-à-dire pas au niveau de la position géographique du véhicule. Pour ce faire, on agit au niveau de l'onduleur 3 dont la fréquence est pilotée par un régulateur.

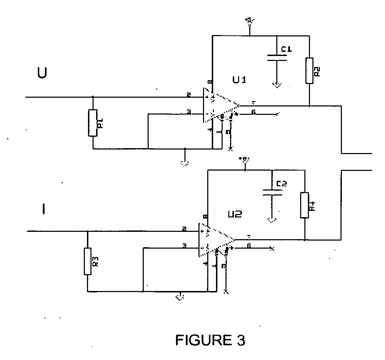

Selon un mode de réalisation montré sur la figure 3, le courant U et la tension I sous forme de signaux analogiques aux bornes du primaire 11 sont convertis en signaux numériques au moyen notamment de comparateurs alimentés en tension. A titre d'exemple, les comparateurs prévus sont alimentés par une tension comprise entre 0 et 3.3V.

Au moyen d'un convertisseur 41, un signal analogique relatif au courant I est converti en un signal numérique Sgn_I1 relatif au courant I, et un signal analogique à la tension U est converti en un signal numérique Sgn_V1 relatif à une tension. Ainsi traités les signaux analogiques définissent des signaux numériques Sgn_I1, Sgn_V1 compatibles avec une carte de contrôle 42.

Les signaux numériques Sgn_I1, Sgn_V1 issus du convertisseur 41 sont injectés en entrée de la carte de contrôle 42 numérique qui émet en sortie au moins deux signaux numériques, un premier signal numérique PWM1-A relatif à la tension U et un second signal numérique PWM1-B relatif à l'intensité, lesdits premier et second signaux formant consigne de fréquence. Les signaux de sortie PWM1-A et PWM1-B peuvent se diriger vers un commutateur 5.

Le commutateur 5 serait alors disposé entre la carte de contrôle et l'onduleur de sorte à choisir lequel des deux signaux de sortie PWM1-A et PWM1-B est choisi pour asservir la consigne de fréquence.

Le convertisseur 41 et la carte de contrôle 42 sont disposés sur une carte mère 40 analogique et numérique.

Dans un circuit résonant, la tension et le courant sont en phase à la résonance. On vise ici à effectuer un transfert de puissance entre le primaire 11 et le secondaire 21 à la résonance.

La figure 2 présente de façon plus précise les différents étages de puissance, et la figure 1 représente en détail notamment la carte mère ou bloc 40 qui correspond au contrôle.

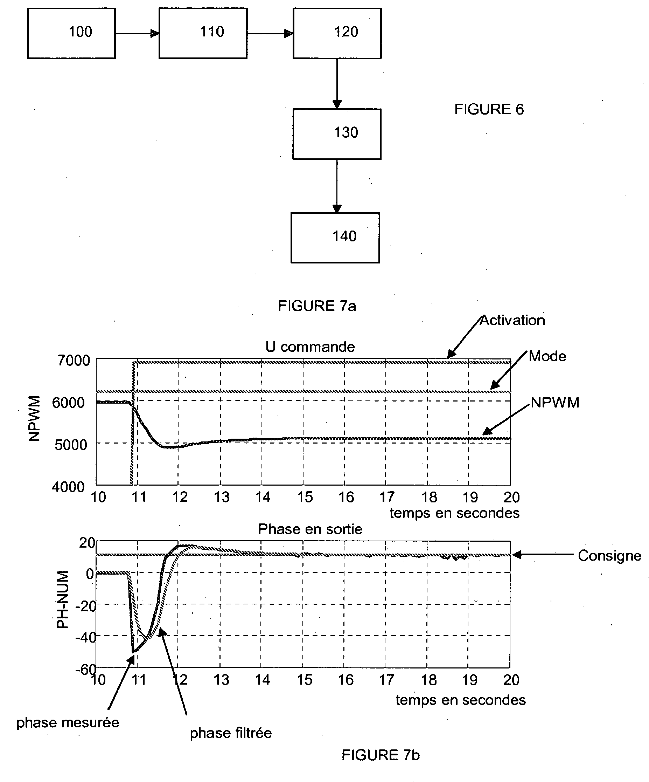

La figure 7b représente la consigne de fréquence NPWM envoyée par la carte de contrôle à l'onduleur en fonction du temps.

Pour piloter l'établissement de la fréquence de l'onduleur 3, on prévoit un traitement numérique qui permet de fournir la valeur du déphasage notée ph_num_red.

Comme représenté sur la figure 6, au niveau analogique, la mesures 100 de la tension U et du courant I pour convertir 110 les signaux analogiques relatifs à la tension U et à l'intensité I en signaux numériques Sgn_V1, Sgn_I1. A cet effet, un convertisseur 41 tel qu'illustré figure 3 peut être mis en oeuvre.

Dans la figure 3, U1 et U2 sont des comparateurs de la mesure de la tension U (signal créneau) et la mesure de l'intensité I (signal sinusoïdal). En sortie de ces comparateurs, on a des signaux créneaux positifs déphasés l'un par rapport à l'autre et définissant, pour l'intensité le signal numérique Sgn_I1 et pour la tension le signal numérique Sgn_V1.

Les signaux numériques Sgn_I1, Sgn_V1 sont dirigés vers la carte de contrôle numérique 42.

Au niveau numérique, un traitement numérique permet de calculer 120 la valeur du déphasage entre la tension U et l'intensité I, et d'asservir 130 la fréquence variable de l'onduleur à la valeur du déphasage. A cet effet, la carte de contrôle 42 comprend un calculateur.

Un signal d'initialisation init (booléen) est dirigé vers une autre entrée du calculateur. La valeur du signal d'initialisation init indique l'ordre d'effectuer le transfert de puissance ou non. Ce qui permet de commander 140 l'alimentation électrique de l'onduleur 3 aux bornes desquelles sont reliées la bobine émettrice 11 selon une fréquence variable, image du signal N_PWM défini ci-après.

A cet effet, le calculateur comprend un régulateur, en l'espèce un régulateur par modulation de largeur d'impulsions PWM, dont le signal numérique de sortie correspond directement à la période de hachage de l'onduleur de tension 3. La valeur du signal N_PWM correspond à une valeur de registre PWM et la période de hachage T de l'onduleur 3 est liée à la valeur du signal N_PWM par la relation :

$$T \;=\; N\_PWM/\;10\text{\textasciicircum}8$$

Cette formule étant liée aux cycles d'horloge de la carte de contrôle 2 (avec une fréquence de l'horloge égale à 100MHz).

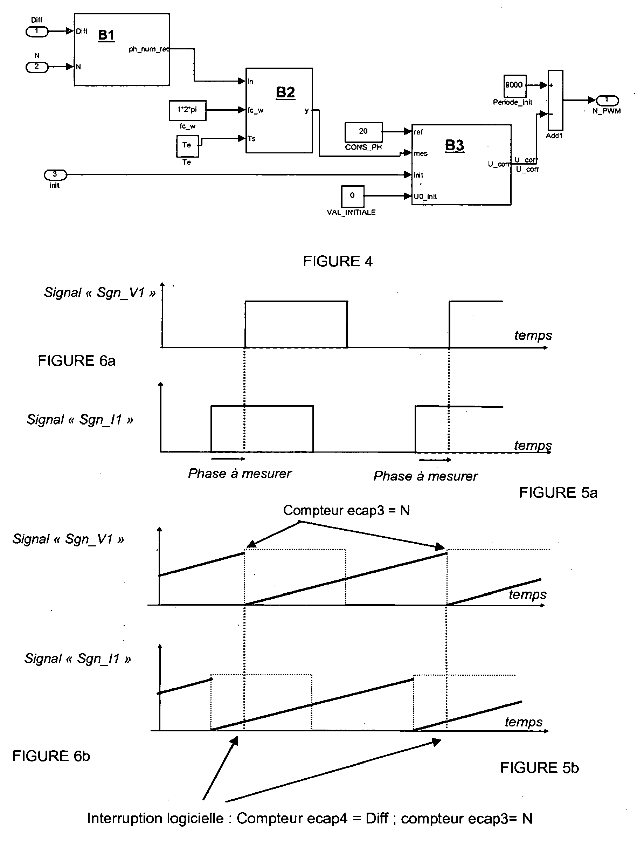

Un mode de réalisation d'une partie au moins du calculateur est illustrée figure 4. Il comprend trois blocs B1 à B3.

Les blocs B1, B2 et B3 permettent de construire, à partir des signaux numériques sortant du convertisseur 41, Sgn_V1, Sgn_I1, la commande de la fréquence de l'alimentation de l'onduleur.

Le bloc B1 correspond au traitement logiciel ayant comme données d'entrées des signaux numériques entrants définis notamment par les signaux numériques relatifs à la tension U et à l'intensité I, respectivement Sgn_V1, Sgn_I1.

Le bloc B2 est un filtre qui réalise une fonction de filtrage, en l'espèce un filtre passe bas d'ordre 1. Le paramètre de réglage (pulsation de coupure) est fc_w dont une valeur typique est par exemple de 628 rad/s. La fonction du bloc B1 est de supprimer les bruits de mesures issus du signal numérique ph_num_red. La valeur de la pulsation de coupure fc_w sert notamment à déterminer la vitesse à laquelle la régulation de phase va être réalisée.

Le bloc B3 a pour fonction de réaliser la régulation de phase en boucle fermée. A titre d'exemple, le régulateur utilisé pour le bloc B3 est un régulateur connu de l'homme de l'art du type proportionnel intégral.

Dans un mode de réalisation, le traitement numérique réalisé par le bloc B1 vise à obtenir une mesure très précise et avec une très grande rapidité de la phase entre les deux signaux Sgn_V1 et Sgn_I1. Les phases entre ces deux signaux peuvent être négatives ou positives.

Le signal Sgn_V1 est aiguillé vers une entrée d'interruption de la carte de contrôle, notée ecap3, tandis que le signal Sgn_I1 est aiguillé vers une deuxième entrée capture de la carte de contrôle, notée ecap4. Chaque entrée capture dispose de son propre compteur. Chaque compteur s'incrémente de 1 au moyen d'une horloge de la carte de contrôle connue de l'homme de l'art. La période d'horloge notée TCLK définit une incrémentation de l'horloge et vaut à titre d'exemple 10 nanosecondes.

Comme on peut le voir sur les figures 5a et 5b à lire de manière synchrone, des interruptions matérielles sont définies de sorte que, sur front montant de l'entrée capture ecap3, le compteur relatif à l'entrée capture ecap3 opère une remise à zéro, et sur front montant de l'entrée capture ecap4, le compteur relatif à l'entrée capture ecap4 opère une remise à zéro du compteur associé à ecap4.

A titre d'exemple, comme montré sur la figure 5b, une interruption logicielle est réalisée sur l'entrée ecap3. A l'instant de l'interruption logicielle, le compteur associé à ecap 3 compte un nombre N d'images de la période du signal Sgn_V1. Cette valeur est mémorisée par la carte de contrôle et le compteur est remis à zéro. Ainsi la période du signal mesurée vaut $T = N * TCLK$.

A l'instant où le compteur associé à l'entrée capteur ecap3 est remis à zéro, on mémorise la valeur du compteur associé à l'entrée ecap4. Lorsque le signal Sgn_I1 est en avance de phase par rapport à Sgn_V1, alors la valeur lue sur le compteur vaut Diff. La valeur Diff est directement image de ce retard, et la phase mesurée en degrés est alors égale à $360 * Diff / N$. Lorsque le sign Sgn_I1 est en retard de phase par rapport Sgn_V1 alors la valeur lue sur le compteur vaut $N - Diff$, et la phase mesurée en degrés vaut $360 * (Diff - N)/N$.

Une fois les nombres N et Diff obtenu, il est possible de distinguer si la phase est positive ou négative en fonction de la comparaison entre les nombres Diff et N/2 :

- Si $Diff < N/2$ alors la phase mesurée est égale à $360 * Diff/N$ et est comprise entre 0 et 180 degrés.
- Si $Diff > N/2$ alors la phase mesurée est égale à $360 * (Diff - N) / N$ et est comprise entre -180 et 0 degrés.

Dans un exemple de réalisation permettant de déterminer la phase à partir des valeurs des compteurs N et Diff, lorsque le compteur diff est inférieur à la moitié de la période N la phase renvoyée est $360*Diff/N$. Lorsque le compteur diff est supérieur à la moitié de la période N, la phase renvoyée est $360 * (Diff/N -1)$.

Dans un mode de réalisation, le principe de l'asservissement est de partir d'une fréquence initiale basse, déterminée par la valeur initiale, qui correspond par exemple à une valeur initiale typique T_init égale à 9000. Cette valeur est homogène à un temps, pour revenir en secondes on divise par $10^8$, avec une fréquence de l'horloge égale à 100MHz.

Cette valeur initiale T_init est paramétrable.

Ainsi si la valeur initiale vaut 9000, la fréquence initiale de l'onduleur 3 vaut alors :

$$\texttt{Fréquence = 10\^{}8/9000 = 11\;111 Hz.}$$

Lorsque le régulateur est activé, la commande de la fréquence de l'onduleur 3 est fixée par la valeur du signal N_PWM suivant la relation :

$$\texttt{N\_PWM = T\_init - U\_Corr}$$

U_Corr étant la sortie du régulateur P-I (négative au départ).

Ainsi la valeur du signal N_PWM va progressivement diminuer et la fréquence de l'alimentation va progressivement augmenter jusqu'à la valeur souhaitée de résonance.

Les paramètres de réglages du correcteur P-I (non représentés sur les figures) sont :

- le gain proportionnel Kp,
- le gain intégral Ki.

Ces deux paramètres permettent de régler la vitesse de convergence de la fréquence variable vers la résonance.

La première entrée du bloc B3 est une valeur de consigne de déphasage CONS_PH que l'on souhaite atteindre. A titre d'exemple, la valeur type de la consigne de déphasage CONS_PH est 0°. Le signal numérique ph_num_red étant construit numériquement, cela permet avantageusement de paramétrer une consigne de phase nulle, ce qui constitue un avantage par rapport à un traitement analogique de la mesure du déphasage entre la tension U et l'intensité I en évitant ainsi les différentes imperfections d'un système de traitement analogique.

La deuxième entrée correspond à la grandeur à réguler, il s'agit de la phase mesurée ph_num_red, laquelle peut être filtrée au moyen du bloc 2.

La troisième entrée correspond au signal init (signal booléen indiquant un état d'initialisation) ; lorsque le signal vaut 1 le signal signifie un état d'attente pour lequel on ne cherche pas à transférer de puissance, et que la sortie du contrôleur PI est égale à la valeur fixée par la quatrième entrée, donc ici une valeur nulle.

Lorsque le signal init vaut 0, la sortie du contrôleur PI va progressivement diminuer (car la valeur initiale est de l'ordre de -90°) ; le correcteur va ainsi diminuer progressivement N_PWM en partant de la valeur fixée par T_init, jusqu'à la valeur souhaitée (la valeur proche de la résonance).

La quatrième entrée correspond à une valeur initiale VAL_INITIALE en l'espèce fixée à 0. Aucune consigne n'est envoyée tant que l'ordre de charge n'a pas été donné c'est-à-dire que le signal « init » n'est pas passé à 0.

La figure 7a et la figure 7b illustrent de manière synchrone respectivement la consigne de fréquence NPWM envoyée par la carte de contrôle à l'onduleur en fonction du temps et l'évolution du signal de déphasage ph_num_red en fonction du temps, lors d'un essai.

Sur la figure 7a, sont montrées trois courbes, une première courbe relative à la consigne de fréquence NPWM, une seconde courbe relative à un signal noté Mode indiquant si l'invention est en boucle ouverte (la fréquence est fixe) ou en boucle fermée (la fréquence varie pour obtenir la phase souhaitée), et une troisième courbe relative à un signal noté Activation définissant le signal d'un bouton avec lequel on déclenche manuellement le début du transfert de puissance de la charge de la batterie.

Comme on peut le voir, sur la figure 7a, avant t= 10,8s Activation vaut 0, et vers t = 10,8 s, il vaut 1.

Ainsi, avant t= 10,8 s, le signal NPWM est constant, et après t = 10,8 s, le signal NPWM diminue progressivement jusqu'à la valeur souhaitée de résonnance.

Sur la figure 7b, sont montrées trois courbes, une quatrième courbe relative notée Consigne relative à la consigne de phase, une cinquième courbe relative à la phase mesurée ph_num_red, et une sixième courbe relative à la phase ph_num_red filtrée par le bloc 2 notée phase filtrée.

A titre d'exemple, comme on peut le voir sur la figure 1, lorsque le signal Activation vaut 0, il n'y a pas de découpage par l'onduleur et donc la phase n'est pas mesurée. Dès lors que le signal Activation vaut 1, le régulateur proportionnel intégral est initialisé à une correction nulle. Comme on le voit sur la figure 7a, la consigne de fréquence maximale a été fixée dans cet essai à NPWMmax = 6 000 correspondant à une fréquence f = 16 670 Hz.

Comme on peut le voir sur la figure 7b, le bruit sur la mesure est très faible et les différents signaux sont stabilisés rapidement. En outre, la phase filtrée permet de s'affranchir des éventuels bruits de mesure.

A noter que l'asservissement a été réglé ici assez peu dynamique, mais qu'il est possible d'accélérer de façon significative la rapidité de l'asservissement.

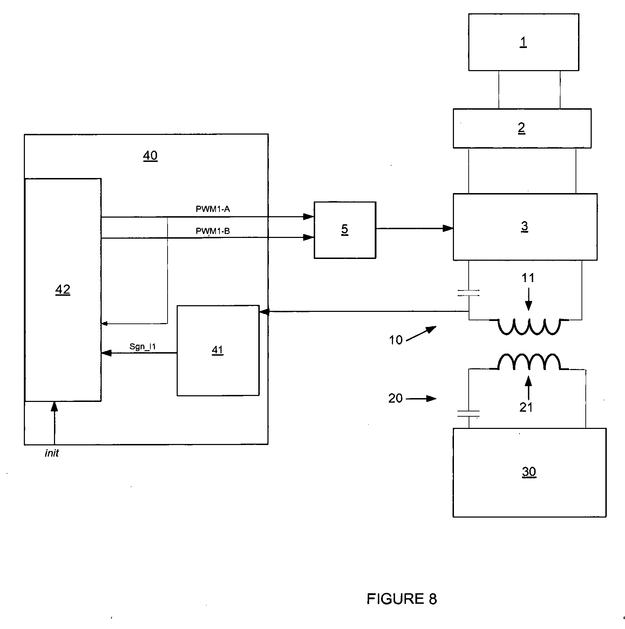

La figure 8 présente l'ensemble du système de charge sans contact et la simplicité du contrôle obtenu grâce à la mesure numérique des signaux en provenance du circuit de charge 10.

Le signal en provenance du circuit de charge 10 est une information analogique image d'un courant ou d'une tension dans le circuit résonant de la bobine émettrice. Ce signal peut par exemple être le courant dans la bobine ou bien la tension aux bornes du condensateur. L'unité de contrôle 40 est simplifiée par le fait qu'un traitement numérique est effectué à partir des signaux Sgn_I1 et (Sgn_V1, PWM1-A).

**Revendications**

**1.** Procédé de charge sans contact d'une batterie (Batt) d'un véhicule automobile électrique (30) par induction magnétique entre un circuit résonant émetteur comprenant une bobine émettrice (11) d'un dispositif de charge (10) et un circuit résonant récepteur (20) V du véhicule comprenant une bobine réceptrice (21), le véhicule étant positionné au-dessus de la bobine émettrice de sorte à pouvoir assurer un couplage magnétique entre la bobine émettrice et la bobine réceptrice, le procédé comprenant des étapes consistant à :

a) commander l'alimentation électrique ainsi que les consignes d'un onduleur (3) aux bornes duquel est reliée la bobine émettrice selon une fréquence variable,
b) mesurer dans un circuit analogique au moins un signal analogique relatif à un courant (I) ou à une tension (U) aux bornes de la bobine émettrice,

**caractérisé en ce qu'**il comporte les étapes suivantes :

c) traiter numériquement au moyen d'une carte de contrôle (42) au moins deux signaux numériques entrants, un premier signal numérique (Sgn_V1, PWM1-A) entrant relatif à la tension (U) et un second signal numérique (Sgn_I1, PWM1-B) relatif au courant (I), pour calculer le déphasage entre le courant (I) et la tension (U),

d) transmettre des signaux numériques (PWM1-A, PWM1-B) de sortie de la carte de contrôle à l'onduleur de sorte à asservir l'onduleur à la valeur calculé du déphasage entre le courant (I) et la tension (U).

2. Procédé selon la revendication 1 comprenant en outre l'étape suivante :

- convertir ledit au moins un signal analogique en au moins un signal numérique (Sgn_I1, Sgn_V1).

3. Procédé selon la revendication 2, dans lequel :

- durant l'étape c) : lesdits au moins deux signaux numériques entrants sont définis par un signal numérique (Sgn_V1) relatif à la tension et un signal numérique (Sgn_I1) relatif au courant, ces deux signaux (Sgn_I1, Sgn_V1) étant issus d'une étape de conversion tel que définie dans la revendication 2.

4. Procédé selon la revendication 2, dans lequel durant l'étape c), les au moins deux signaux numériques entrants sont définis au choix par :

- un signal numérique (Sgn_I1) relatif au courant et issu d'une étape de conversion tel que défini dans la revendication 2 et un signal numérique (PWM1-A) de sortie relatif à la tension, ou,
- un signal numérique (Sgn_V1) relatif à la tension et issu d'une étape de conversion tel que défini dans la revendication 2 et un signal numérique (PWM1-B) de sortie relatif au courant.

5. Procédé selon l'une quelconque des revendications précédentes, comportant les étapes suivantes :

• Comparer :

- le nombre d'incrémentations d'un premier compteur associé au dit signal numérique relatif à une première grandeur physique du type tension (Sgn_V1, PWM1-A) ou courant (Sgn_I1, PWM1-B) durant une période (P), et,
- le nombre d'incrémentations d'un second compteur associé au dit signal numérique relatif à une seconde grandeur physique différente de ladite première grandeur physique du type courant (Sgn_I1, PWM1-B) ou tension (Sgn_V1, PWM1-A) lorsque ledit signal numérique relatif à la première grandeur physique commence une nouvelle période (P),

Lesdits premier et second compteurs s'incrémentant régulièrement temporellement ;
• calculer la différence d'incrémentation entre les premier et second compteurs ;
• déterminer le déphasage entre les première et seconde grandeurs physiques en fonction de la différence d'incrémentation entre les premier et second compteurs.

6. Procédé selon l'une quelconque des revendications précédentes, dans lequel l'asservissement par le traitement numérique est mis en oeuvre par un régulateur proportionnel intégral dont la valeur du gain proportionnel et la valeur du gain intégral sont choisis de sorte à optimiser la vitesse de convergence de la fréquence de l'onduleur vers la valeur prédéterminée.

7. Procédé selon l'une quelconque des revendications précédentes, comprenant au moins une étape de filtrage de la valeur du déphasage.

8. Programme d'ordinateur, comportant des instructions pour l'exécution du procédé de charge sans contact d'une batterie d'un véhicule automobile selon l'une quelconque des revendications 1 à 7, lorsque ledit programme est mis en oeuvre par la carte mère.

9. Système de charge sans contact par induction magnétique d'une batterie (Batt) d'un véhicule automobile électrique (30) dont un circuit résonant récepteur comprend une bobine réceptrice (21),
Le système comprenant :

- un circuit résonant émetteur comprenant une bobine émettrice (11),
- un onduleur (3) aux bornes duquel est reliée la bobine émettrice,
- une carte mère (40) analogique et numérique sur laquelle est disposée une carte de contrôle (42), au moins un signal analogique relatif à une grandeur physique du type courant (I) ou tension (U) aux bornes de la bobine émettrice étant mesuré pour être traité numériquement au moyen de ladite carte de contrôle, au moins deux signaux numériques comportant un premier signal numérique (Sgn_V1, PWM1-A) relatif à la tension et un second signal numérique (Sgn_I1, PWM1-B) relatif au courant étant injectés en entrée de la carte de contrôle numérique laquelle émet en sortie au moins un signal numérique (PWM1-A,PWM1-B) formant consigne de commutation vers l'onduleur, ladite carte de contrôle traitant numériquement lesdits au moins deux signaux numériques (Sgn_V1, Sgn_I1, PWM1-A, PWM1-B) injectés en entrée de la carte de contrôle pour calculer le déphasage entre le courant et la tension, et,

la carte de contrôle (42) étant configurée pour asservir par un traitement numérique la fréquence des consignes de commutation (PWM1-A, PWM1-B) envoyées à l'onduleur (3) à la valeur du déphasage, de sorte à pouvoir assurer un couplage magnétique entre la bobine émettrice (11) et la bobine réceptrice (21) lorsque le véhicule (30) est positionné au-dessus de la bobine émettrice (11).

10. Système selon la revendication 9, dans lequel un convertisseur est disposé sur ladite carte mère analogique et est adapté à convertir au moins un signal analogique en au moins un signal numérique (Sgn_I1, Sgn_V1).

11. Système selon la revendication 10, dans lequel lesdits premier et deuxième signaux (Sgn_V1, Sgn_I1) injectés en entrée de la carte de contrôle sont issus du dit convertisseur.

12. Système selon la revendication 9, dans lequel lesdits premier (Sgn_V1, Sgn_I1) et deuxième signaux (PWM1-A, PWM1-B) injectés en entrée de la carte de contrôle sont respectivement issus du dit convertisseur et de ladite carte de contrôle.

**Patentansprüche**

1. Verfahren zum kontaktlosen Laden einer Batterie (Batt) eines elektrischen Kraftfahrzeugs (30) durch magnetische Induktion zwischen einem Sender-Resonanzkreis, der eine Senderspule (11) einer Ladevorrichtung (10) enthält, und einem Empfänger-Resonanzkreis (20) des Fahrzeugs, der eine Empfängerspule (21) enthält, wobei das Fahrzeug über der Senderspule in der Weise positioniert wird, dass eine magnetische Kopplung zwischen der Senderspule und der Empfängerspule sichergestellt werden kann, wobei das Verfahren die Schritte umfasst, die darin bestehen:

a) die elektrische Versorgung sowie die Stellwerte eines Wechselrichters (3), mit dessen Anschlüssen die Senderspule verbunden ist, entsprechend einer veränderlichen Frequenz zu steuern und
b) in einer analogen Schaltung wenigstens ein auf einen Strom (I) oder auf eine Spannung (U) an den Anschlüssen der Senderspule bezogenes analoges Signal zu messen,

**dadurch gekennzeichnet, dass** es die folgenden Schritte umfasst:

c) digitales Verarbeiten mittels einer Steuerkarte (42) wenigstens zweier eingehender digitaler Signale, wobei ein erstes eingehendes digitales Signal (Sgn_V1, PWM1-A) auf die Spannung (U) bezogen ist und ein zweites eingehendes digitales Signal (Sgn_I1, PWM1-B) auf den Strom (I) bezogen ist, um die Phasenverschiebung zwischen dem Strom (I) und der Spannung (U) zu berechnen, und
d) digitale Ausgangssignale (PWM1-A, PWM1-B) der Steuerkarte an den Wechselrichter zu übertragen, derart, dass der Wechselrichter auf den berechneten Wert der Phasenverschiebung zwischen dem Strom (I) und der Spannung (U) geregelt wird.

2. Verfahren nach Anspruch 1, das außerdem den folgenden Schritt umfasst:

- Umsetzen des wenigstens einen analogen Signals in wenigstens ein digitales Signal (Sgn_I1, Sgn_V1).

3. Verfahren nach Anspruch 2, wobei:

- im Schritt c): die wenigstens zwei eingehenden digitalen Signale durch ein digitales Signal (Sgn_V1), das auf die Spannung bezogen ist, und ein digitales Signal (Sgn_I1), das auf den Strom bezogen ist, definiert sind, wobei diese zwei Signale (Sgn_I1, Sgn_V1) aus einem Umsetzungsschritt, wie er im Anspruch 2 definiert ist, stammen.

4. Verfahren nach Anspruch 2, wobei im Schritt c) die wenigstens zwei eingehenden digitalen Signale wahlweise definiert sind durch:

   - ein digitales Signal (Sgn_I1), das auf den Strom bezogen ist und aus einem Umsetzungsschritt, wie er im Anspruch 2 definiert ist, stammt, und ein digitales Ausgangssignal (PWM1-A), das auf die Spannung bezogen ist, oder
   - ein digitales Signal (Sgn_V1), das auf die Spannung bezogen ist und von einem Umsetzungsschritt, wie er im Anspruch 2 definiert ist, stammt, und ein digitales Ausgangssignal (PWM1-B), das auf den Strom bezogen ist.

5. Verfahren nach einem der vorhergehenden Ansprüche, das die folgenden Schritte umfasst:

   • Vergleichen:

   - der Anzahl von Inkrementierungen eines ersten Zählers, der dem digitalen Signal zugeordnet ist, das auf eine erste physikalische Größe des Typs Spannung (Sgn_V1, PWM1-A) oder Strom (Sgn_I1, PWM1-B) bezogen ist, während einer Periode (P) mit
   - der Anzahl von Inkrementierungen eines zweiten Zählers, der dem digitalen Signal zugeordnet ist, das auf eine von der ersten physikalischen Größe verschiedene zweite physikalische Größe des Typs Strom (Sgn_I1, PWM1-B) oder Spannung (Sgn_V1, PWM1-A) bezogen ist, wenn das auf die erste physikalische Größe bezogene digitale Signal eine neue Periode (P) beginnt, wobei der erste und der zweite Zähler zeitlich regelmäßig inkrementiert werden;

   • Berechnen der Inkrementierungsdifferenz zwischen dem ersten und dem zweiten Zähler; und
   • Bestimmen der Phasenverschiebung zwischen der ersten und der zweiten physikalischen Größe als Funktion der Inkrementierungsdifferenz zwischen dem ersten und dem zweiten Zähler.

6. Verfahren nach einem der vorhergehenden Ansprüche, wobei die Regelung durch die digitale Verarbeitung durch einen Proportional-Integral-Regler ausgeführt wird, dessen Proportionalverstärkungswert und dessen Integralverstärkungswert in der Weise gewählt werden, dass die Konvergenzgeschwindigkeit der Frequenz des Wechselrichters zu dem vorgegebenen Wert optimiert wird.

7. Verfahren nach einem der vorhergehenden Ansprüche, das wenigstens einen Schritt des Filterns des Phasenverschiebungswertes umfasst.

8. Computerprogramm, das Befehle umfasst, um das Verfahren zum kontaktlosen Laden einer Batterie eines Kraftfahrzeugs nach einem der Ansprüche 1 bis 7 auszuführen, wenn das Programm durch die Hauptplatine ausgeführt wird.

9. System zum kontaktlosen Laden durch magnetische Induktion einer Batterie (Batt) eines elektrischen Kraftfahrzeugs (30), wovon ein Empfänger-Resonanzkreis eine Empfängerspule (21) enthält, wobei das System Folgendes umfasst:

   - einen Sender-Resonanzkreis, der eine Senderspule (11) enthält,
   - einen Wechselrichter (3), mit dessen Anschlüssen die Senderspule verbunden ist,
   - eine analoge und digitale Hauptplatine (40), auf der eine Steuerkarte (42) angeordnet ist, wobei wenigstens ein analoges Signal, das auf eine physikalische Größe des Typs Strom (I) oder Spannung (U) an den Anschlüssen der Senderspule bezogen ist, gemessen wird, um mittels der Steuerkarte digital verarbeitet zu werden, wobei wenigstens zwei digitale Signale, die ein erstes digitales Signal (Sgn_V1, PWM1-A), das auf die Spannung bezogen ist, und ein zweites digitales Signal (Sgn_I1, PWM1-B), das auf den Strom bezogen ist, enthalten, in den Eingang der digitalen Steuerkarte eingegeben werden, die an ihrem Ausgang wenigstens ein digitales Signal (PWM1-A, PWM1-B) ausgibt, das einen Kommutationsstellwert für den Wechselrichter bildet, wobei die Steuerkarte die wenigstens zwei digitalen Signale (Sgn_V1, Sgn_I1, PWM1-A, PWM1-B), die in den Eingang der Steuerkarte eingegeben werden, digital verarbeitet, um die Phasenverschiebung zwischen dem Strom und der Spannung zu berechnen, und

   wobei die Steuerkarte (42) konfiguriert ist, durch eine digitale Verarbeitung die Frequenz der Kommutationsstellwerte (PWM1-A, PWM1-B), die zu dem Wechselrichter (3) geschickt werden, auf den Wert der Phasenverschiebung zu regeln, derart, dass eine magnetische Kopplung zwischen der Senderspule (11) und der Empfängerspule (21) gewährleistet werden kann, wenn das Fahrzeug (30) über der Senderspule (11) positioniert ist.

10. System nach Anspruch 9, wobei ein Umsetzer auf der analogen Hauptplatine angeordnet ist und dafür ausgelegt ist, wenigstens ein analoges Signal in wenigstens ein digitales Signal (Sgn_I1, Sgn_V1) umzusetzen.

11. System nach Anspruch 10, wobei das erste und das zweite Signal (Sgn_V1, Sgn_I1), die in den Eingang der Steuerkarte eingegeben werden, von dem Umsetzer ausgegeben werden.

12. System nach Anspruch 9, wobei das erste Signal (Sgn_V1, Sgn_I1) und das zweite Signal (PWM1-A, PWM1-B), die in den Eingang der Steuerkarte eingegeben werden, vom Umsetzer bzw. von der Steuerkarte ausgegeben werden.

**Claims**

1. Method of contactless charging of a battery (Batt) of an electric motor vehicle (30) by magnetic induction between a resonant transmitter circuit comprising a transmitter coil (11) of a charging device (10) and a resonant receiver circuit (20) of the vehicle comprising a receiver coil (21), the vehicle being positioned above the transmitter coil so as to provide magnetic coupling between the transmitter coil and the receiver coil, the method comprising steps consisting of:

   a) controlling the electrical power supply and the instructions of an inverter (3) to the terminals of which the transmitter coil is connected according to a variable frequency,
   b) measuring in an analog circuit at least one analog signal relating to a current (I) or to a voltage (U) across the terminals of the transmitter coil,

   **characterized in that** it includes the following steps:

   c) digitally processing, by means of a control card (42), at least two incoming signals, namely a first incoming digital signal (Sgn_V1, PWM1-A) relating to the voltage (U) and a second incoming digital signal (Sgn_I1, PWM1-B) relating to the current (I), in order to calculate the phase difference between the current (I) and the voltage (U),
   d) transmitting digital output signals (PWM1-A, PWM1-B) from the control card to the inverter so as to lock the inverter to the calculated value of the phase difference between the current (I) and the voltage (U).

2. Method according to Claim 1, further comprising the following step:

   - converting said at least one analog signal to at least one digital signal (Sgn_I1, Sgn_V1).

3. Method according to Claim 2, wherein:

   - during step c): said at least two incoming digital signals are formed by a digital signal (Sgn_V1) relating to the voltage and a digital signal (Sgn_I1) relating to the current, these two signals (Sgn_I1, Sgn_V1) resulting from a conversion step as defined in claim 2.

4. Method according to Claim 2, wherein, during step c), the at least two incoming digital signals are formed, according to choice, by:

   - a digital signal (Sgn_I1) relating to the current and resulting from a conversion step as defined in claim 2, and an output digital signal (PWM1-A) relating to the voltage, or
   - a digital signal (Sgn_V1) relating to the voltage and resulting from a conversion step as defined in claim 2, and an output digital signal (PWM1-B) relating to the current.

5. Method according to any of the preceding claims, including the following steps:

   • comparing:

      - the number of incrementations of a first counter associated with said digital signal relating to a first physical quantity of the voltage type (Sgn_V1, PWM1-A) or of the current type (Sgn_I1, PWM1-B) during a period (P), and
- the number of incrementations of a second counter associated with said digital signal relating to a second physical quantity, different from said first physical quantity, of the current type (Sgn_I1, PWM1-B) or of the voltage type (Sgn_V1, PWM1-A), when said digital signal relating to the first physical quantity begins a new period (P),

said first and second counters being incremented regularly in time;

    • calculating the difference in incrementation between the first and second counters;
    • determining the phase difference between the first and second physical quantities as a function of the difference in incrementation between the first and second counters.

6. Method according to any of the preceding claims, wherein the locking by the digital processing is implemented by a proportional-integral controller in which the value of the proportional gain and the value of the integral gain are chosen so as to optimize the speed of convergence of the inverter frequency to the predetermined value.

7. Method according to any of the preceding claims, comprising at least one step of filtering the value of the phase difference.

8. Computer program, including instructions for executing the method of contactless charging of a battery of a motor vehicle according to any of Claims 1 to 7, when said program is executed by the motherboard.

9. System of contactless charging, by magnetic induction, of a battery (Batt) of an electric motor vehicle (30), in which a resonant receiver circuit comprises a receiver coil (21),
the system comprising:

- a resonant transmitter circuit comprising a transmitter coil (11),
- an inverter (3), to the terminals of which the transmitter coil is connected,
- an analog and digital motherboard (40) on which a control card (42) is located, at least one analog signal relating to a physical quantity of the current (I) or voltage (U) type at the terminals of the transmitter coil being measured so as to be digitally processed by means of said control card, at least two digital signals including a first digital signal (Sgn_V1, PWM1-A) relating to the voltage and a second digital signal (Sgn_I1, PWM1-B) relating to the current being injected into the input of the digital control card, which transmits from its output at least one digital signal (PWM1-A,PWM1-B) forming a switching instruction for the inverter, said control card digitally processing said at least two digital signals (Sgn_V1, Sgn_I1, PWM1-A, PWM1-B) injected into the input of the control card for calculating the phase difference between the current and the voltage,

the control card (42) being configured to lock the frequency of the switching instructions (PWM1-A, PWM1-B) sent to the inverter (3) to the value of the phase difference by means of digital processing, so that magnetic coupling can be provided between the transmitter coil (11) and the receiver coil (21) when the vehicle (30) is positioned above the transmitter coil (11).

10. System according to Claim 9, wherein a converter is provided on said analog motherboard and is adapted to convert at least one analog signal to at least one digital signal (Sgn_I1, Sgn_V1).

11. System according to Claim 10, wherein said first and second signals (Sgn_V1, Sgn_I1) injected into the input of the control card are output from said converter.

12. System according to Claim 9, wherein said first signals (Sgn_V1, Sgn_I1) and second signals (PWM1-A, PWM1-B), injected into the input of the control card, are output from said converter and from said control card respectively.

FIGURE 1

FIGURE 2

FIGURE 3

FIGURE 4

Signal « Sgn_V1 »

FIGURE 6a

Signal « Sgn_I1 »

Phase à mesurer          Phase à mesurer

FIGURE 5a

Compteur ecap3 = N

Signal « Sgn_V1 »

Signal « Sgn_I1 »

FIGURE 6b

FIGURE 5b

Interruption logicielle : Compteur ecap4 = Diff ; compteur ecap3= N

FIGURE 6

```
100 → 110 → 120
                ↓
              130
                ↓
              140
```

FIGURE 7a

**U commande**

Activation
Mode
NPWM

**Phase en sortie**

Consigne

phase mesurée
phase filtrée

FIGURE 7b

FIGURE 8

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 2317624 A

- US 2011291606 A